# EUROPEAN PATENT APPLICATION

(11) **EP 4 746 318 A1**
(43) Date of publication of application: **20.05.2026**
(21) Application number: 24213298.3
(22) Date of filing: 15.11.2024
(51) Int. Cl.: H04B 17/27, H04B 17/391, H04B 17/20, H04B 17/373

(54) **METHODS, COMPUTER PROGRAMS, AND APPARATUSES FOR TRAINING A MACHINE LEARNING MODEL TO PREDICT A RADIO QUALITY FOR USER EQUIPMENT AT A LOCATION**

(71) Applicant: Deutsche Telekom AG, 53113 Bonn (DE)
(72) Inventor: XU, Bangnan, 64291 Darmstadt (DE)
(74) Representative: 2SPL Patentanwälte PartG mbB

(57) **Abstract**

Examples relate to methods, computer programs, and apparatuses for training a machine learning model to predict a radio quality for user equipment, UE, at a location covered by a mobile communication system and for predicting a radio quality for user equipment at a location covered by a mobile communication system. The method (10) for training a machine learning model to predict a radio quality for user equipment, UE, at a location covered by a mobile communication system comprises generating (11) training data with basic feature training sets, which are based on measurements conducted at positions in a serving radio cell, additional feature sets comprising information about radio parameters of the serving radio cell and/or one or more neighboring radio cells, geometrical features of measurement positions, wherein the geometrical features comprise distances being determining for a radio propagation channel between the serving radio cell and a measurement position, and radio qualities obtained at measurement positions. The method (20) further comprises training (12) the machine learning model with the training data.

## Description

### Field

Examples relate to methods, computer programs, and apparatuses for training a machine learning model to predict a radio quality for user equipment, UE, at a location covered by a mobile communication system and for predicting a radio quality for user equipment at a location covered by a mobile communication system, more particularly, but not exclusively, to a concept for using machine learning to predict a radio quality for user equipment at a location covered by a mobile communication system taking into account geometrical features of the radio propagation channel.

### Background

Mobile communication systems have evolved over the last decades and high-quality wireless services have become available. Emerging 5G (5th Generation mobile network) services, e.g. live video productions, have very challenging requirements on throughput and/or latency. To meet such challenging requirements and to use the radio resources efficiently, it is beneficial to predict receiving conditions and available data rates at the location of a mobile terminal. There are several indicators that may be used to predict or indicate a reception quality. One example is the reference signal receiving power (RSRP), which is used in mobile networks as defined by the 3^{rd} Generation Partnership Project (3GPP). A cell specific reference signal is transmitted by a base station or nodeB. At user equipment, UE, the reference signal can be measured, e.g. in terms of reception power at the UE.

RSRP is usually measured in a UE and reported to base station for scheduling radio resources and deciding on a MCS (modulation and coding scheme) for this UE. However, if it is necessary to know the RSRP of a UE at a certain location before it can be measured, it needs to be predicted by channel modelling. Due to the complexity of radio propagation, the accuracy of RSRP prediction based on channel modelling is not reliable.

In 5G and future mobile networks, advanced network features are required to support challenging mobile services like live video production, AR/VR (Augmented Reality/Virtual Reality), and AI (Artificial Intelligence) with very high QoS (Quality of Service, e.g. data rate) requirements. Such kind of requirements cannot be met at any location and at any time in 5G and beyond. Therefore, achievable spectrum efficiency in terms of data rate per resource block (bps/RB, bit per second per radio resource block or kbps/RB, kilobit per second per RB) of a UE needs to be predicted before such challenging services can be accepted.

The data rate that a UE can be achieved depends on the used MCS scheme, MIMO layers (Multiple Input Multiple Output) and assigned RBs. The assignment of RBs to a mobile device depends on RB usage policy or scheduling algorithm. It can be, for example, to assign a fixed number of RBs to a UE. However, which MCS and how many MIMO layers to be used for a UE are decided by base station based on many factors in real time. These factors are, among others, channel quality, radio environment characteristics and channel error rate etc. If the data rate of a UE needs to be predicted before the real time measurement can be done, MCS index and MIMO layers are not available.

### Summary

It is a finding of the present disclosure that radio quality prediction can be improved by considering geometrical features, which are determining for the radio channel. These features can complement measurement data and known radio parameters. Using the geometrical features not only pathloss but also the effects of reflection and diffractions can be considered in the prediction. If these features when used in prior training can significantly enhance later prediction.

Examples provide a method for training a machine learning model to predict a radio quality for UE at a location covered by a mobile communication system. The training method comprises generating training data with basic feature training sets, which are based on measurements conducted at positions in a serving radio cell. The training data also comprises additional feature sets comprising information about radio parameters of the serving radio cell and/or one or more neighboring radio cells. Moreover, the training data comprises geometrical features of measurement positions, wherein the geometrical features comprise distances being determining for a radio propagation channel between the serving radio cell and a measurement position. The training data also comprises information about radio qualities obtained at measurement positions. The training method further comprises training the machine learning model with the training data. Examples may therewith provide an efficiently trained machine learning model for radio quality prediction.

For example, a basic feature training set comprises one or more elements of the group of information about a time of a measurement, a position of the measurement, a cell identification of the serving radio cell measured, a reception quality, and a spectral efficiency at the measurement position. Thereby, the training can be based on basic features relevant for the reception quality at a certain position. An additional feature set may comprise one or more elements of the group of information about an antenna position and direction of the serving radio cell and/or the neighboring radio cells, a beam type of the serving radio cell and/or the neighboring radio cells, a number of beams of the serving radio cell and/or the neighboring radio cells, load parameters of the serving radio cell and/or the one or more neighboring radio cells, and a transmission power and antenna gain of a reference signal of the serving radio cell and/or the neighboring radio cells. Thereby, relevant radio parameters or radio settings determining the radio qualities can be used during training to enable the machine learning model to learn about their influence.

Furthermore, the geometrical features may comprise one or more elements of the group of information about a distance between a measurement position and the antenna of the serving radio cell and/or the one or more neighboring radio cells, a smallest vertical distance from a connection line between a measurement position and a radio cell antenna to a building or an object between a measurement position and the radio cell antenna of the serving radio cell and/or the one or more neighboring radio cells, a distance between a measurement position and a building, a distance between a measurement position and a reflector, a relative angle between a measurement position and an antenna of the serving radio cell and/or of the one or more neighboring radio cells. Thereby, the machine learning model can be trained with the geometric features of a certain position with respect to the radio propagation channel. Thereby the machine learning model is enabled to learn about the influences of the geometrical features and can then reflect them in predictions. The training method may further comprise generating training data for different frequency bands. Thereby, the trained model can be further adapted to different frequency bands, which also influence the properties of the radio propagation channel.

Examples further provide a method for predicting a radio quality for UE at a location covered by a mobile communication system. The method comprises obtaining a basic feature prediction set based on the location of the UE and obtaining an additional feature set comprising information about radio parameters of a serving radio cell and/or of one or more neighboring radio cells. The prediction method further comprises determining geometrical features based on the location and the additional feature set. The geometrical features comprise distances being determining for a radio propagation channel between the serving radio cell and the UE. The prediction method further comprises using a machine learning model being trained according to the above to obtain a predicted radio quality of the UE at the location based on the basic feature prediction set, the additional feature set and the geometrical features. Examples may therewith provide enhanced radio quality prediction.

In line with the above, the basic feature prediction set used as an input for the prediction method may comprise one or more elements of the group of information about a time for the prediction, the location of the UE, and a cell identification of a serving radio cell at the location of the UE. The prediction can hence be based on the basic feature set. Moreover, the additional feature set may comprise one or more elements of the group of information about an antenna position and direction of the serving radio cell and/or the one or more neighboring radio cells, a beam type of the serving radio cell and/or the one or more neighboring radio cells, a number of beams of the serving radio cell and/or the one or more neighboring radio cells, load parameters of the serving radio cell and/or the one or more neighboring radio cells, and a transmission power and antenna gain of a reference signal of the serving radio cell and/or the one or more neighboring radio cells. The prediction can hence be based on one or more of the determining additional features.

As already laid out for the training, the geometrical features may comprise one or more elements of the group of information about a distance between the UE and the antenna of the serving radio cell and/or the one or more neighboring radio cells, a smallest vertical distance from a connection line between the UE and a radio cell antenna to a building or an object between the UE and the radio cell antenna of the serving radio cell and/or the one or more neighboring radio cells, a distance between the UE and a building, a distance between the UE and a reflector, a relative angle between the UE and an antenna of the serving radio cell and/or of the one or more neighboring radio cells. Thereby, relevant geometries can be used to enhance prediction results.

In examples the radio quality may be obtained as spectral efficiency in terms of a data rate per radio resource block scheduled by the serving radio cell. Additionally or alternatively the radio quality may be obtained as reference signal receive power of a reference signal transmitted by the serving radio cell. The radio quality may be determined using different metrics in examples.

The basic feature set and the additional feature sets may be further based on a transmission frequency of the serving radio cell and/or the one or more neighboring radio cells. The prediction and training method may further comprise categorizing one or more of the basic features and the additional features in a limited number of value categories. Thereby the value range, resolution and amount of the input parameters for training and prediction can be set reasonably. For example, an application programming interface, API, based system may be used, which comprises one or more functions configured to obtain the basic feature set and the additional feature set. Thereby, an efficient implementation structure may be used in examples.

The prediction method may further comprise a prediction engine using a machine learning model configured to communicate with the one or more functions, wherein the one or more functions comprise one or more elements of the group of a support function configured to determine the geometrical features, a cell load prediction function, and a reference signal reception power prediction function. The respective functions may be efficiently implemented in a modular manner.

A computer program having a program code for performing one of the training and/or prediction methods described herein, when the computer program is executed on a computer, a processor, or a programmable hardware component is a further example. Another example is an apparatus for a mobile communication system. The apparatus comprises one or more interfaces, which are configured to communicate in the mobile communication system and one or more processing devices, which are configured to perform one of the methods described herein.

Examples further provide a mobile communication system comprising an example of the apparatus.

### Brief description of the Figures

Some examples of apparatuses, methods, and/or computer programs will be described in the following by way of example only, and with reference to the accompanying figures, in which
Fig. 1 shows a flowchart of an example of a method for training a machine learning model to predict a radio quality for UE at a location covered by a mobile communication system;
Fig. 2 depicts a flowchart of an example of a method for predicting a radio quality for UE at a location covered by a mobile communication system.
Fig. 3 illustrates a block diagram of an example of an apparatus for training a machine learning model or for predicting a radio quality in a mobile communication system;
Fig. 4 shows an example of a machine learning framework in an example;
Fig. 5 depicts angles of a UE to a cell antenna in an example scenario;
Fig. 6 illustrates a radio environment in an example scenario;
Fig. 7 shows a block diagram of an example of a method for predicting RSRP based on a machine learning model;
Fig. 8 depicts interference from neighboring cells in an example scenario;
Fig. 9 illustrates neighboring cells in a scenario;
Fig. 10 shows a distance to building and a distance to reflector in an example scenario;
Fig. 11 depicts a system implementation for prediction of a spectral efficiency in an example;
Fig. 12 illustrates 5G coverage plotted with measured values in an example scenario;
Fig. 13 shows a building constellation in an example scenario;
Fig. 14 depicts measured values in location C and D at the top, and predicted RSRP in location C and D without considering detailed radio environment, such as the height of buildings, at the bottom;
Fig. 15 illustrates predicted RSRP in location C and D considering detailed radio environment such as the height of buildings in an example;
Fig. 16 shows measured values in location C and D at the top, and predicted RSRP in location C and D without considering detailed radio environment, such as the height of buildings, at the bottom; and
Fig. 17 depicts predicted UL spectrum efficiency in location C and D considering detailed radio environment, such as the height of buildings, an example.

### Detailed Description

Some examples are now described in more detail with reference to the enclosed figures. However, other possible examples are not limited to the features of these examples described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

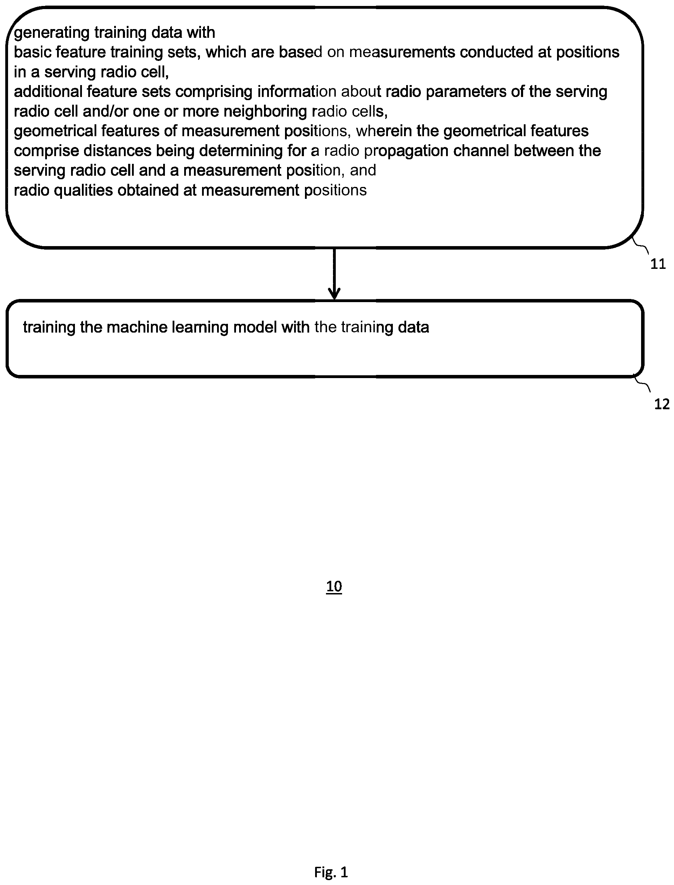

Fig. 1 shows a flowchart of an example of a method 10 for training a machine learning model to predict a radio quality for UE at a location covered by a mobile communication system. The method 10 comprises generating 11 training data with basic feature training sets, which are based on measurements conducted at positions in a serving radio cell, radio qualities obtained at measurement positions, additional feature sets comprising information about radio parameters of the serving radio cell and/or one or more neighboring radio cells, and geometrical features of the measurement positions. The geometrical features comprise distances being determining for a radio propagation channel between the serving radio cell and a measurement position. The training method 10 further comprises training 12 the machine learning model with the training data.

The prediction is to be carried out at certain locations of a UE in the mobile communication system. Before the prediction, measurements are carried out to collect training data with basic data features taken at certain positions in the mobile communication system. The positions can be different from the locations for which the later prediction is carried out. In examples a future location of a UE may be estimated, e.g. using a trajectory of a UE. This may happen for a moving UE using a certain service, e.g. streaming video used by a vehicle travelling on a highway. It may then be of interest for an operator to predict service availability (radio quality) at future locations, e.g. to adapt a video quality accordingly. Another example is a live video production which is scheduled or requested for a certain time at a certain location.

It is then desirable to predict the radio quality available at that time and location before acknowledging such a service.

Input parameters play a crucial role in both training a machine learning model and making predictions using it. During training, input parameters (also referred to as features herein) are the variables or attributes that the model learns from to identify patterns and relationships. These parameters are usually part of a labeled dataset, where each instance includes the input parameters and the corresponding output (target) value. The quality and relevance of these features significantly impact the model's performance. In contrast, during prediction, the trained model receives a set of input parameters without the target value and uses its learned patterns to generate predictions. Input parameters used during prediction are consistent with those used during training in terms of format, scale, and representation to avoid errors and maintain prediction accuracy. In the following two specific examples will be detailed, one predicts RSRP and the other one predicts spectrum efficiency.

When training for RSRP prediction, the basic features, the additional features and the geometrical features are used together with obtained measurements (target values) for training the machine learning model for a position the features refer to and the measurements were taken at. Predicted RSRP values for a location can then be output by the trained machine learning model based on basic features, additional features and geometrical features for said location.

When training for spectral efficiency, the basic features, the additional features, the geometrical features and RSRP are used together with obtained measurements of the spectral efficiency (target values) for training the machine learning model for a position the features, RSRP and measurements refer to. The training data sets for spectral efficiency may hence also comprise RSRP values (and load values), which can be predicted, measured or determined otherwise. Predicted spectrum efficiency values for a location can then be output by the trained machine learning model based on basic features, additional features, geometrical features, and RSRP (and load values) for said location. The RSRP may be obtained as an additional prediction as outlined above. Other mechanisms to obtain or estimate the RSRP as input for the spectrum efficiency estimation are also conceivable.

A basic feature training set may comprise one or more elements of the group of information about a time of a measurement, a position of the measurement, a cell identification of the serving radio cell measured, a reception quality, and a spectral efficiency at the measurement position.

For example, RSRP is the linear average of reference signal power (in Watts) across the specified bandwidth. A UE may measure the RSRP for cell selection, reselection and handover. Further details on a formal definition of RSRP can be found in 3GPP Technical specification (TS) 36.214, V18.0.0 (2024-03), Technical Specification 3rd Generation Partnership Project; Technical Specification Group Radio Access Network; Evolved Universal Terrestrial Radio Access (E-UTRA); Physical layer; Measurements (Release 18). For RSRP determination cell-specific reference signals R0 according 3GPP TS 36.211, V18.0.1 (2024-04), Technical Specification, 3rd Generation Partnership Project; Technical Specification Group Radio Access Network; Evolved Universal Terrestrial Radio Access (E-UTRA); Physical channels and modulation (Release 18), shall be used. If the UE can reliably detect that R1 is available, it may use R1 in addition to R0 to determine RSRP.

In 5G and future mobile networks, advanced network features are required to support challenging mobile services like live video production, ARJVR (Augmented Reality/Virtual Reality) and AI (Artificial Intelligence) with very high QoS (Quality of Service, e.g. data rate) requirements. Such kind of requirements cannot be met at any location and at any time in 5G and future networks. Therefore, an achievable data rate of a mobile device needs to be predicted before such challenging services can be accepted for a mobile terminal.

For example, the estimated radio quality is based on a reference signal reception power, RSRP, estimated for a UE at a location. Measurements thereof can be used for training the machine learning model.

RSRP is only one quality measure as defined by 3GPP. There are multiple other quality measures that could be used reception quality measure. Examples are received signal code power (RSCP), reference signal received quality (RSRQ), reference signal signal-to-interference ratio (RS SIR), reference signal signal-to-interference-and-noise ratio (RS SINR), reference signal signal-to-noise ratio (RS SNR), etc. The term reference signal indicates that the signal used for conducting such a measurement is known at the mobile terminal or UE. There are other terms for known signals such as pilot signal, pilot symbol, pilot sequence, reference symbol, reference sequence, training signal, training symbol, training sequence, etc.

An additional feature set may comprise one or more elements of the group of information about an antenna position and direction of the serving radio cell and/or the neighboring radio cells, a beam type of the serving radio cell and/or the neighboring radio cells, a number of beams of the serving radio cell and/or the neighboring radio cells, load parameters of the serving radio cell and/or the one or more neighboring radio cells, and a transmission power and antenna gain of a reference signal of the serving radio cell and/or the neighboring radio cells.

In 5G networks, antenna beam types are designed to efficiently manage signal direction and focus, enhancing performance and coverage. Different beam types are used to cater to various network requirements and environments. Omnidirectional beams radiate signals in all directions, useful for broad coverage but less efficient for high data rates in specific directions. In contrast, directional beams focus the signal in specific directions, concentrating power to extend reach and improve data rates in a given area. Beamforming is a critical technique in 5G, where beams can be dynamically adjusted to track users as they move. Static beamforming maintains a constant direction, while adaptive beamforming adjusts the angle based on user location, helping reduce interference and improve connectivity. Massive MIMO (Multiple-Input Multiple-Output) enhances this further by using a large number of antennas to create narrow, focused beams that serve multiple users simultaneously, increasing network capacity. Analog, digital, and hybrid beamforming techniques each offer various advantages; analog beamforming uses phase shifts to direct signals, digital uses signal processing for flexibility, and hybrid combines the two for a balance between efficiency and flexibility. These beam types and beamforming techniques collectively enable 5G networks to meet the demands of high-speed, low-latency, and large-scale connectivity. In examples, the beam type may specify the antenna gain that can be expected from the beam and it may also allow estimating the beam's (or beamforming concept's) influence on the interference situation at the location of prediction.

In examples there may be further radio parameters such as an MCS, a spreading factor, a bandwidth, a transmission power, an antenna gain, a numerology, etc. A spatial transmission scheme may comprise a number of Multiple-Input-Multiple-Output layers to be used for the UE in the specific region. In examples there may be further or alternative spatial transmission mode parameters, such as a beam, a steering vector, a polarization, an antenna, a transmit diversity mode, a spatial channel or subchannel, an antenna port, etc. All of these parameters may be determining on a service quality experienced by a UE. However, the radio propagation channel is based on the basic determining factors, which may set the requirements for using advance transmission schemes.

In examples some of the properties of the radio propagation channel may be reflected in the geometrical features, which may comprise one or more elements of the group of information about a distance between a measurement position and the antenna of the serving radio cell and/or the one or more neighboring radio cells, a smallest vertical distance from a connection line between a measurement position and a radio cell antenna to a building or an object between a measurement position and the radio cell antenna of the serving radio cell and/or the one or more neighboring radio cells, a distance between a measurement position and a building, a distance between a measurement position and a reflector, a relative angle between a measurement position and an antenna of the serving radio cell and/or of the one or more neighboring radio cells. The geometrical features, which are considered for training and prediction may enable a higher accuracy for the prediction. In examples, the training method may comprise generating training data for different frequency bands. Examples for such frequency bands include the bands of 3,6 GHz and 2,1 GHz for 5G SA (standalone) networks. The frequency band together with the geometrical features of the radio propagation channel are determining for the radio quality at a certain location at a certain time.

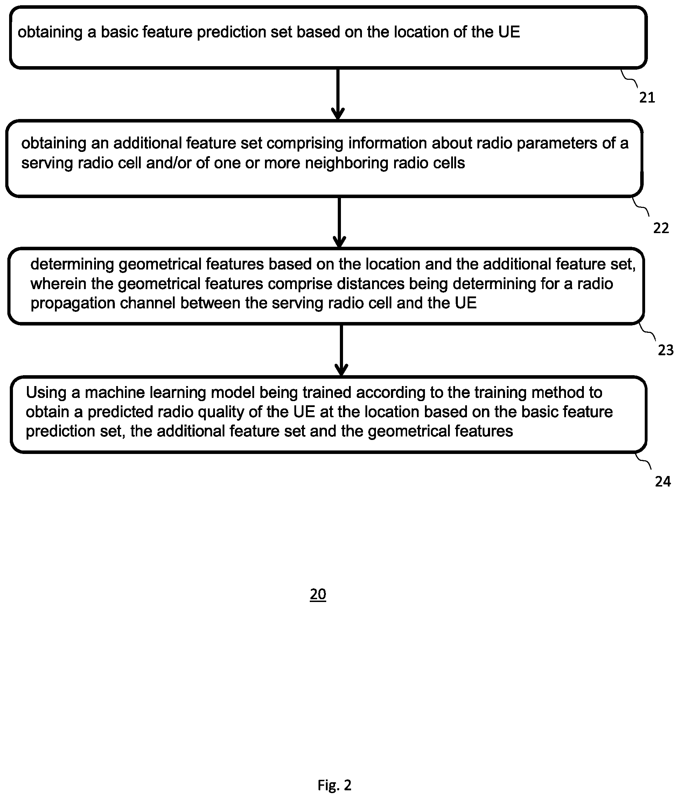

Fig. 2 depicts a flowchart of an example of a method 20 for predicting a radio quality for UE at a location covered by a mobile communication system. The prediction method 20 comprises obtaining 21 a basic feature prediction set based on the location of the UE and obtaining 22 an additional feature set comprising information about radio parameters of a serving radio cell and/or of one or more neighboring radio cells. The prediction method 20 further comprises determining 23 geometrical features based on the location and the additional feature set. The geometrical features comprise distances being determining for a radio propagation channel between the serving radio cell and the UE. The prediction method further comprises using 24 a machine learning model being trained according to training method 10 described herein (cf. Fig. 1) to obtain a predicted radio quality of the UE at the location based on the basic feature prediction set, the additional feature set and the geometrical features.

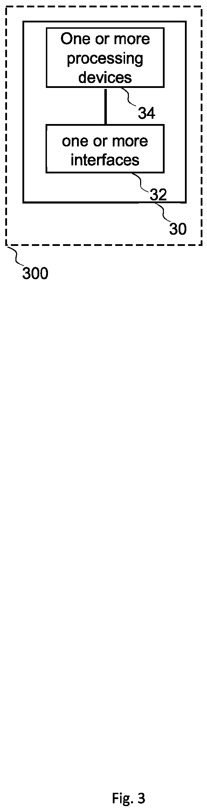

Fig. 3 illustrates a block diagram of an example of an apparatus 30 for training a machine learning model or for predicting a radio quality in a mobile communication system. The apparatus 30 comprises one or more interfaces 32 configured to communicate in the mobile communication system. The one or more interfaces 32 are coupled to one or more processing devices 34. The one or more processing devices 24 are configured to perform one of the methods 10, 20 described herein. Fig. 3 also illustrates an example of a network entity 300 or a mobile communication system 300 comprising an example of the apparatus 30.

As illustrated in Fig. 3, the respective one or more processing devices 34 are coupled to the one or more interfaces 32. The one or more interfaces 32 may correspond to one or more inputs and/or outputs for receiving and/or transmitting information, which may be in digital (bit) values according to a specified code or protocol, within a module, between modules or between modules of different entities. For example, an interface 32 may comprise interface circuitry configured to receive and/or transmit information. In examples an interface 32 may correspond to any means for obtaining, receiving, transmitting or providing analog or digital signals or information, e.g., any connector, contact, pin, register, input port, output port, conductor, lane, etc., which allows providing or obtaining a signal or information. An interface 32 may be configured to communicate (transmit, receive, or both) in a wireless or wireline manner and it may be configured to communicate, i.e., transmit and/or receive signals, information with further internal or external components. The one or more interfaces 32 may comprise further components to enable communication in a (mobile) communication system or network, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

The one or more processing devices 34 may be implemented using one or more processing units, one or more circuitries, any means for processing, such as a processor, a computer or a programmable hardware component being operable with accordingly adapted software. In other words, the described function of the one or more processing devices 34 may as well be implemented in software, which is then executed on one or more programmable hardware components. Such hardware components may comprise a general-purpose processor, a Digital Signal Processor (DSP), a micro-controller, etc.

In examples measurements may be carried out by UEs, mobile terminals, or communication devices, which may communicate in the mobile communication system with the network entity, e.g., a base station. For example, the communication device and the network entity may communicate in/via a mobile communication system. The mobile communication system may comprise a plurality of transmission points and/or base stations operable to communicate radio signals with the communication device. In an example, the mobile communication system may comprise the communication device and the network entity.

A network entity, e.g., the network entity, can be located in the fixed or stationary part of the network or system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to a communication device. Such a radio signal may comply with radio signals as, for example, standardized by 3GPP or, generally, in line with one or more of the above listed systems. Thus, a network entity may correspond to a NodeB, an eNodeB, an ngNB, a BTS (Base Transceiver Station), an access point, etc.

The mobile communication system may be cellular. The term cell refers to a coverage area of radio services provided by a transmission point, a remote unit, a remote head, a remote radio head, communication device, network entity or a NodeB, an eNodeB, an ngNB, respectively. It should be noted that a base station or any of the listed entities may provide multiple cells. However, since a cell is provided by a base station, the terms cell and base station may be used synonymously in this description, even if a base station provides multiple cells. A wireless communication device, e.g., the communication device, can be registered or associated with at least one cell (e.g., the network entity), e.g., it can be associated to a cell such that data can be exchanged between the network and the mobile in the coverage area of the associated cell using a dedicated channel, connection or link.

In general, the communication device is a device that is capable of communicating wirelessly. In particular, however, the communication device may be a mobile communication device, e.g., a communication device that is suitable for being carried around by a user. For example, the communication device may be a User Terminal (UT) or User Equipment (UE) within the meaning of the respective communication standards being used for mobile communication. For example, the communication device may be a mobile phone, such as a smartphone, or another type of mobile communication device, such as a smartwatch, a laptop computer, a tablet computer, or autonomous augmented-reality glasses. For example, the communication device and the network entity may be configured to communicate in a cellular mobile communication system. Accordingly, the communication device and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the communication device and the network entity may be configured to communicate in a mobile communication system/cellular mobile communication system.

In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 6^{th} Generation system (6G), a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

Machine learning models used for prediction may focus on identifying patterns in data to make informed forecasts about unseen data points. These models are trained on historical or labeled datasets, where input features (such as basic training features, additional features and geometrical features) are associated with specific outcomes (measurements) or target values (like expected values or likelihood of exceeding a threshold). For predictive tasks, popular models include linear regression, decision trees, support vector machines, neural networks, and ensemble methods like random forests and gradient boosting. Each model type has unique strengths; for instance, linear regression is valuable for problems with linear relationships between input and output, while complex models like neural networks excel in capturing intricate, non-linear relationships in high-dimensional data.

The training of these predictive models involves optimizing parameters that map the relationship between inputs and outputs in the training dataset. The process begins with splitting the dataset into training and validation (or test) subsets to evaluate the model's accuracy on new data. Training adjusts model parameters by minimizing a loss function, which measures the discrepancy between the model's predictions and actual outcomes. Optimization techniques like gradient descent iteratively adjust parameters to minimize the loss. Regularization techniques, such as L1 or L2 regularization, may also be applied to prevent overfitting, which occurs when a model performs well on the training data but poorly on new data due to excessive sensitivity to noise or patterns unique to the training set.

Evaluation of predictive models involves calculating metrics like mean squared error (MSE) for regression tasks or accuracy, precision, recall, and F1-score for classification tasks. The chosen metric depends on the prediction goal and nature of the data. In real-world applications, models are often fine-tuned through hyperparameter tuning, which adjusts aspects of the model structure, such as tree depth in decision trees or the number of neurons in a neural network layer. Effective model training and tuning enable predictive models to generalize well, making them robust tools for forecasting and decision-making across diverse fields, including finance, healthcare, and environmental science.

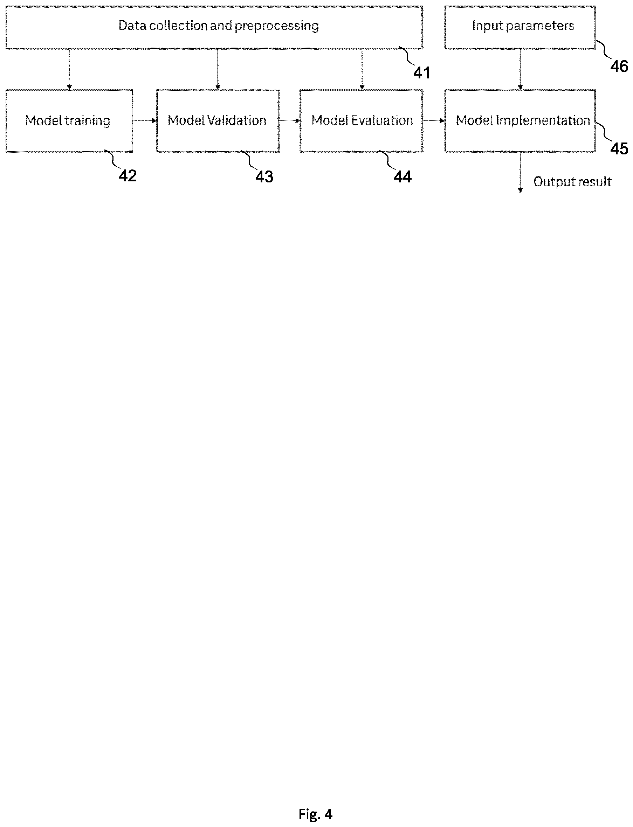

Fig. 4 shows an example of a machine learning framework in an example. Fig. 4 depicts data collection and preprocessing 41 on the left-hand side. The data is used for model training 42, model validation 43, and model evaluation 44. Once the model is evaluated, it is implemented 45 to process input parameters 46 and to generate output results using the implemented model 45 and according to input parameters 46. Fig. 4 shows a general ML framework. The accuracy of ML results is strongly dependent on the quality of data features used for the model training, validation, and evaluation. The data features used for ML model training decide the input parameters for the ML inference engine as well.

In the following examples will be detailed, which provide a ML (machine learning) based system and algorithm for RSRP prediction. Some examples provide a solution to extend collected data from a UE with additional data features for training, validation, and evaluation of ML models to predict RSRP.

Table 1 is an example of collected data from a UE that includes position of UE (longitude and latitude, lon. and lat.), the serving radio cell ID (PCI, Physical Cell Identification) and RSRP. With the collected data, no ML model can be trained to predict RSRP. Therefore, the collected data need to be extended with additional data features.

**Table 1 collected data from a UE:**

| Longitude | Latitude | PCI | RSRP |
|---|---|---|---|
| 8,62483 | 49,86608 | 209 | -94 |

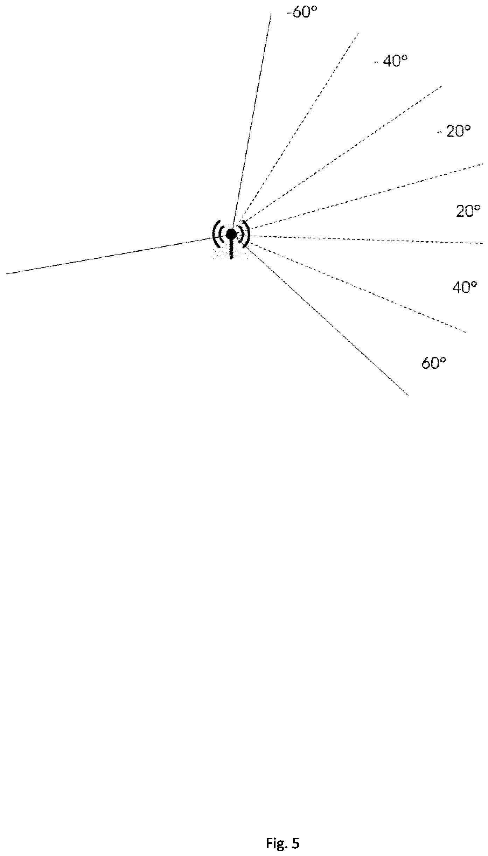

Based on location of the UE and/or the PCI of the serving radio cell, data features, like Transmission power (Tx), antenna gain (G), beam type (T), number of beams (N), distance from the UE to the serving cell antenna (D), and relative angle of UE to the serving cell antenna (A) can be provided by a support function. The Angle (A) can be categorized to 6 areas with 20, 40 and 60 degrees on the right side and -20, -40 and -60 degrees on the left side, as shown in Fig. 5.

Fig. 5 depicts angles of a UE to a cell antenna in an example scenario. Fig. 5 shows a base station in the center hosting three cells (120° sectors). The dashed lines indicate 20° angular areas.

Parameters of all radio cells are stored in a database in the support function. Transmission power (Tx), antenna gain (G), beam type (T), number of beams (N) can be obtained directly from the stored data, while the distance (D) and Angle (A) can be calculated based on the longitude and latitude of the UE and the location and height of the cell antenna.

Table 2 shows the data features that are extended with Transmission power (Tx), antenna gain (G), beam type (T), number of beams (N), the distance (D) and the Angle (A).

**Table 2 indicates collected data with extended features:**

| Longitude | Latitude | PCI | Tx | T | G | N | D | A | RSRP |
|---|---|---|---|---|---|---|---|---|---|
| 8.62483 | 49.86608 | 209 | 100 | S | 5 | 3 | 300 | 20 | -94 |

As outline above the basic feature training set may comprise one or more elements of the group of information about a time of a measurement, a position of the measurement, a cell identification of the serving radio cell measured, a reception quality, and a spectral efficiency at the measurement position. Hence, in some examples the measured radio qualities may be part of the basic training feature set. The measured radio qualities may be the RSRP at the respective position. However, other reception quality measurements are also conceivable. The additional feature set may comprise one or more elements of the group of information about an antenna position and direction of the serving radio cell and/or the neighboring radio cells, a beam type of the serving radio cell and/or the neighboring radio cells, a number of beams of the serving radio cell and/or the neighboring radio cells, load parameters of the serving radio cell and/or the one or more neighboring radio cells, and a transmission power and an antenna gain of a reference signal of the serving radio cell and/or the neighboring radio cells.

In Table 2, features of radio environment that impact RSRP are missing. To consider the radio environment, additional features need to be added, such as line of sight (LOS) or non-line of sight (NLOS), Distance to Building (D2B) and Distance to Reflector (D2R). A reflector is a building or an object that is behind the UE and higher than the UE position. These features are also referred to as geometrical features as outlined above.

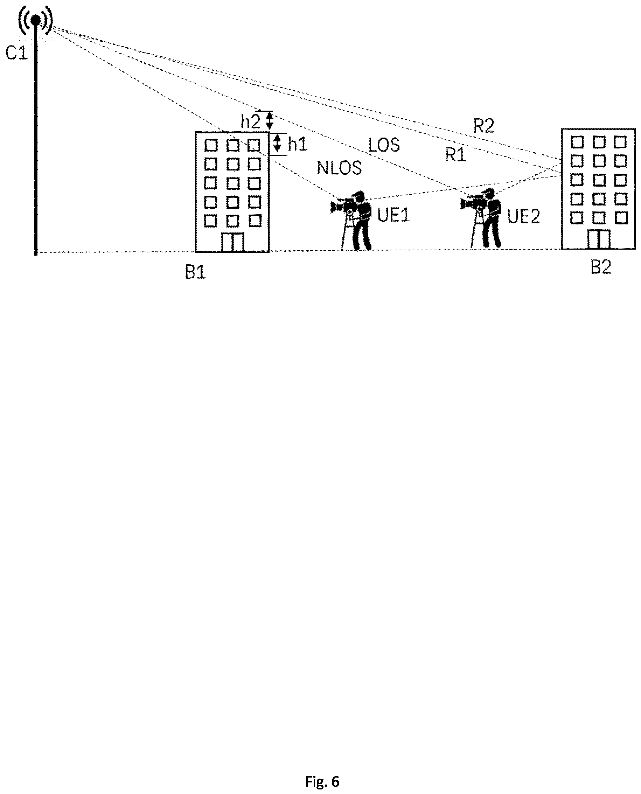

Fig. 6 illustrates a radio environment in an example scenario. Fig. 6 shows a cell C1, which covers UE1 and UE2. The radio propagation channel in the scenario shown in Fig. 6 is influenced by buildings B1 and B2. B1 lies in the direct connection line between UE1 and C1, more specifically Building B1 extends into the direct connection by height h1. UE1 therefore has a non-line-of-sight (NLOS) path to C1. Building B1 ends beneath the direct connection between UE2 and C1 by height h2. Therefore UE 2 has a line-of-sight (LOS) path to C1. Building B2 reflects the signals of C1 to UE 2 via path R2 and to UE 1 via path R1.

Fig. 6 shows a radio environment, where UE1 and UE2 communicate with the radio cell C1. The feature LOS or NLOS can be determined by checking any object, e.g. building, tree or mountain, between the UE and the cell antenna. In Fig. 6, UE1 has a NLOS connection because Building B1 is higher than the connection line between UE1 and the cell antenna, while UE2 has a LOS connection as the Building B1 is under the connection line between UE2 and the cell antenna. The LOS and NLOS can be characterized by the smallest vertical distance (H) from the connection line between the UE and the cell antenna to a building or an object located between them. In Fig. 6, the smallest vertical distance from the connection line between UE1 and the cell antenna C1 to building 1 (h1) is a negative value as Building B1 is higher than the connection line. The negative value h1 means that UE1 has a NLOS connection. The smallest vertical distance from the connection line between UE2 and the cell antenna C1 to building 1 (h2) is a positive value. The positive distance h2 means UE2 has LOS connection. The feature D2B in Fig. 6 is the distance of UE1 and UE2 to the closest building between the UE and the cell antenna, B1. The feature D2R is the distance of UE1 und UE2 to the reflector.

**Table 3 shows data features added with radio environment features (H, D2B and D2R):**

| Longitude | Latitude | PCI | Tx | T | G | N | D | A | H | D2B | D2R | RSRP |
|---|---|---|---|---|---|---|---|---|---|---|---|---|
| 8.62483 | 49.86608 | 209 | 25 | S | 5 | 3 | 300 | 20 | -2 | 5 | 15 | -94 |

Depending on an accuracy requirement, more data features may be taken into account, for example, Frequency (F), weather condition (W) or Event (E, e.g. whether there is a concert or soccer game at the time of prediction) can be added. On the other hand, for the simplicity, some data features can be combined or reduced.

Table 4 shows a data set that can be used for RSRP ML model training, validation, and evaluation. The location data and PCI are removed as it is not relevant for the model training although they are mandatory for determining other data features.

**Table 4 data extended with radio environment features:**

| Tx | T | G | N | D | A | H | D2B | D2R | RSRP |
|---|---|---|---|---|---|---|---|---|---|
| 25 | S | 5 | 3 | 300 | 20 | -2 | 5 | 15 | -95 |

To reduce ML training time, value variations of data features can be reduced. In Table 4, RSRP is changed from -94 to -95. The RSRP value can be categorized in -5 intervals. RSRP value variations can be further reduced by changing any RSRP value smaller than -115 to - 115 and any value larger than -65 to -65. The value range of RSRP can be {-65, -70, -75, -80, -85, -90, -95, -100, -105, -110, -115}. The same approach can be applied to other data features like D, H, D2B and B2R.

In general, one or more of the basic feature set, the additional feature set and the geometrical features may be categorized or classified in a limited number of value categories. This is then used for the training data sets and/or for the input feature sets for the prediction.

After the collected data are prepared as in Table 4, standard ML algorithms like Artificial Neural Networks (ANN) or Support Vector Machine (SVM) can be applied to train, validate, and evaluate ML models for RSRP prediction. The importance of variables can be specified to differentiate the contribution of each variable to the RSRP prediction. For example, the variable vertical distance H could be more relevant than distance D.

The trained model can be deployed in a RSRP ML engine, as shown in Fig. 4. The RSRP prediction function can be invoked by an API call RSRP_prediction_req (lon. lat.). The lon. and lat. is the geolocation of the UE for that RSRP prediction is required. In examples and as outlined before the basic feature prediction set may comprise one or more elements of the group of information about a time for the prediction, the location of the UE, and a cell identification of a serving radio cell at the location of the UE. The information about the location of the UE for which the prediction is carried out is given as longitude (lon.) and latitude (lat.) coordinates. In the present example the prediction method 20 comprises using an API-based system comprising one or more functions configured to obtain the basic feature set and the additional feature set.

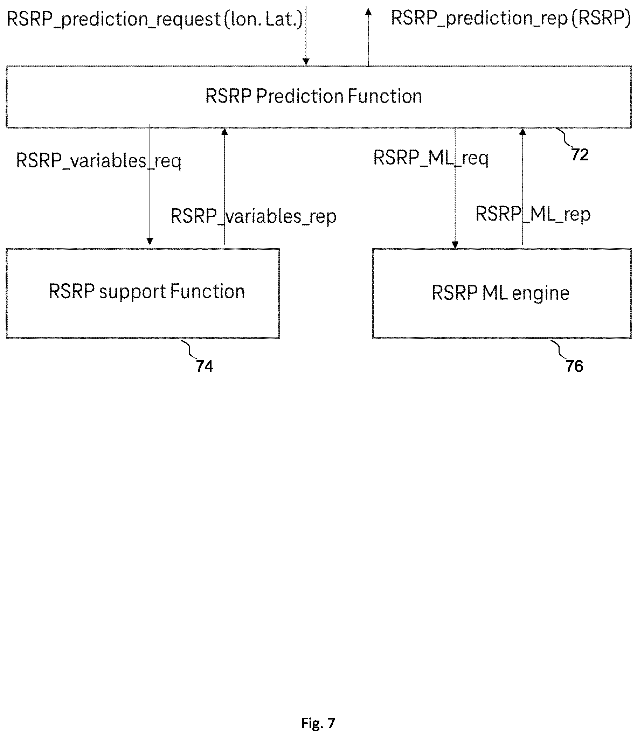

Fig. 7 shows a block diagram of an example of another method for predicting RSRP based on a machine learning model. The RSRP prediction function 72 receives the RSRP_prediction_req (lon., lat.). After receiving the RSRP prediction request, the RSPR prediction function 74 gets the necessary parameters from the support function by invoking an API call RSRP_variables_req (log., lat.). The support function 74 responses with RSRP_variables_req (Tx, T, G, N, D, A, H, D2B, D2R). These variables include the additional feature set (Transmission power (Tx), antenna gain (G), beam type (T), number of beams (N)) and the geometrical features (distance (D), angle (A), height H, distance-to-building and distance-to-reflector).

In general examples the additional feature set may comprise one or more elements of the group of information about an antenna position and direction of the serving radio cell and/or the one or more neighboring radio cells, a beam type of the serving radio cell and/or the one or more neighboring radio cells, a number of beams of the serving radio cell and/or the one or more neighboring radio cells, load parameters of the serving radio cell and/or the one or more neighboring radio cells, and a transmission power and antenna gain of a reference signal of the serving radio cell and/or the one or more neighboring radio cells. The geometrical features may comprise one or more elements of the group of information about a distance between the UE and the antenna of the serving radio cell and/or the one or more neighboring radio cells, a smallest vertical distance from a connection line between the UE and a radio cell antenna to a building or an object between the UE and the radio cell antenna of the serving radio cell and/or the one or more neighboring radio cells, a distance between the UE and a building, a distance between the UE and a reflector, a relative angle between the UE and an antenna of the serving radio cell and/or of the one or more neighboring radio cells.

After getting these parameters, the RSRP prediction function 72 invokes an API call RSRP_ML_req (Tx, T, N, G, D, A, H, D2B, D2R) to the RSRP ML engine 76, which has been trained in line with the above training method. The RSRP ML engine 76 responses with a RSRP_ML_rep (RSRP) to the RSRP prediction function 72 so that the RSRP prediction function 72 can respond with RSRP_prediction_rep (RSRP) to the RSRP prediction request. As shown in this example, the prediction method further comprises a prediction engine 72, 76 using a machine learning model configured to communicate with the one or more functions, e.g. the RSRP prediction function 72. As will be shown in the sequel the one or more functions may comprise one or more elements of the group of a support function configured to determine the geometrical features, a cell load prediction function, and a reference signal reception power prediction function.

In the following another example will be detailed in using a ML-based algorithm predicting spectrum efficiency of a UE in a mobile network. In examples, the radio quality may be obtained as spectral efficiency in terms of a data rate per radio resource block scheduled by the serving radio cell. In the above example, the radio quality is obtained as RSRP of a reference signal transmitted by the serving radio cell. For example, spectrum efficiency may be predicted for a UE in terms of data rate per RB (bps/RB) without knowing the MCS index and MIMO layers.

This example uses ML-based prediction of data rate per RB using collected data from a UE. Table 5 shows data that can be collected from a UE, e.g. lon. and lat. are the location of the UE, PCI and RSRP. DL PRB is the average PRB (physical radio resource block) used for the Downlink (DL), while UL PRB is the average PRB used for Uplink (UL). PDSCH TP (Physical Downlink Shared Channel Throughput) is the DL throughput in kbps and PUSCH TP (Physical Uplink Shared Channel, Throughput) is the UL throughput in kbps.

**Table 5 collected data from a UE:**

| Time | Lon. | Lat. | PCI | RSRP | DL PRB | UL PRB | PDSCH TP | PUSCH TP |
|---|---|---|---|---|---|---|---|---|
| 10/02/2024 11:55:53.000 | 8.62483 | 49.86608 | 209 | -94 | 160 | 189 | 160000 | 17000 |

From Table 5 the spectrum efficiency of the UE can be calculated in terms of kbps/RB as in

**Table 6. Table 6 collected data with extended features of DL kbps/RB and UL kbps/RB:**

| Time | Lon. | Lat. | PCI | RSRP | DL kbps/PRB | UL kbps/PRB |
|---|---|---|---|---|---|---|
| 10/02/2024 11:55:53.000 | 8.62483 | 49.86608 | 209 | -94 | 1000 | 89 |

The data features in Table 6 are not enough to train a ML-model to predict DL/UL kbps/RB. Data features reflecting signal quality of the UE need to be added.

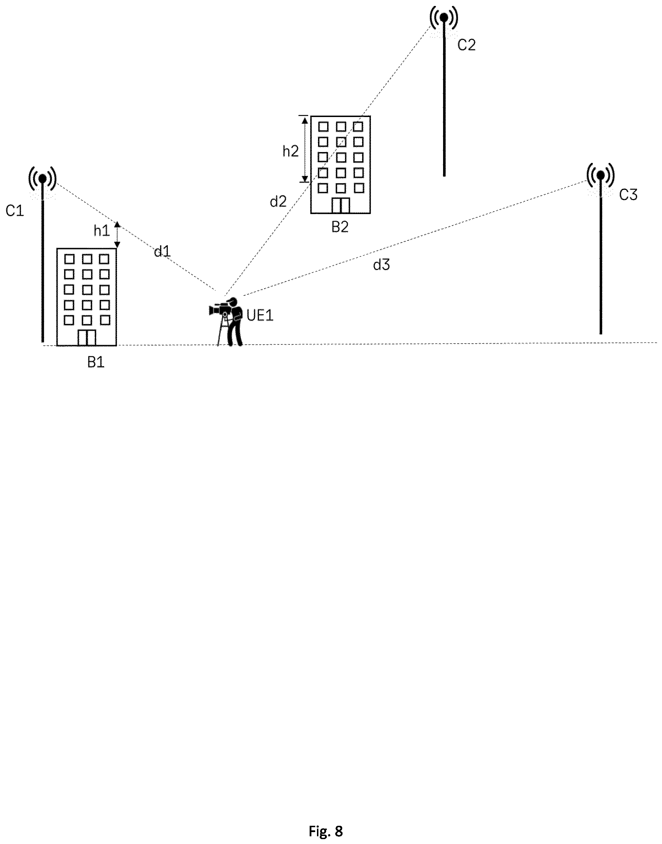

In Table 7 data features impacting signal quality of the UE are added. Fig. 8 depicts interference from neighboring cells in an example scenario. As shown in Fig. 8, d1, d2, d3 are distances from UE1 to the serving and neighboring cells C1, C2, and C3. h1, h2 and 3 are the smallest vertical distances from the connection line between UE1 and the cell antennas to a building B1, B2 or an object between the UE and the cell antennas. If a building or an object is higher than the connection line that causes NLOS, the value of h is negative, such as h2 in Fig. 8. h3 is a fictive value to characterize the situation that there is no building or object between C3 and UE1. More neighboring cells may be added if they cause inference that impacts achievable bps/RB of the UE.

**Table 7 collected data with extended features of interference from neighboring cells:**

| | |
|---|---|
| Time | 10/02/2024 11:55:53.000 |
| Lon. | 8.62483 |
| Lat. | 49.86608 |
| PCI | 209 |
| RSRP | -94 |
| d1 | 200 |
| h1 | 10 |
| d2 | 300 |
| h2 | -30 |
| d3 | 500 |
| h3 | 100 |
| DL kbps/PRB | 1000 |
| UL kbps/PRB | 89 |

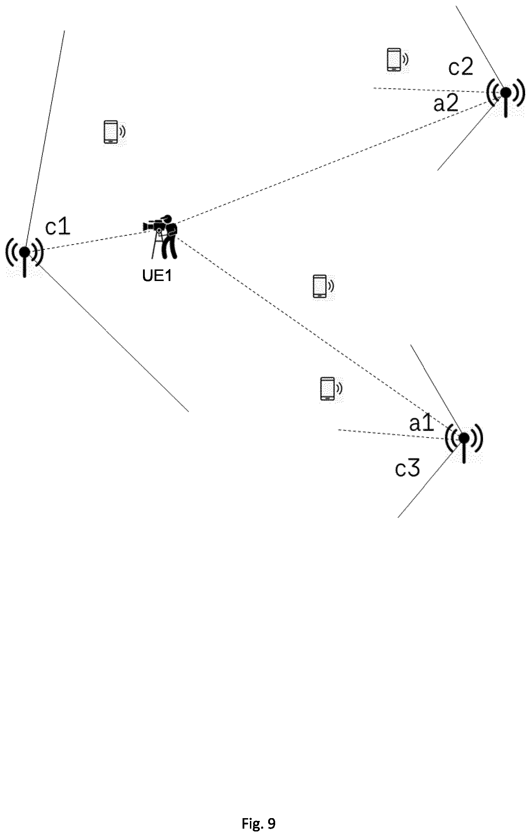

Neighboring cells are determined by the distance from the UE to the cell antennas as well as the angle of the UE to the cell antennas. Fig. 9 illustrates neighboring cells in an example scenario. In Fig. 9 UE1 is served by cell c1 (serving radio cell is c1). Cell antennas c2 and c3 are within the interference range of UE1. The interference range is determined based on the frequency band used for the mobile network. If it is in the 3600 MHz band, the interference range of 2500 meters is reasonable. Generally, the frequency band may be considered, as it influences the propagation properties and pathloss of the radio channel. The basic feature set and the additional feature set may further be based on a transmission frequency of the serving radio cell and/or the one or more neighboring radio cells. If there are many neighboring cells within the range, the number of neighboring cells can be limited to a fixed number, e.g. the three neighboring cells that are closest to the UE. Cells are considered as neighboring cells only if the relative angle (a) of UE to the cell antenna a is smaller than 60 degrees as shown in Fig. 9 with the angles a1 and a2.

The interference caused by neighboring cells is dependent on the traffic loads in these cells. The load can be classified in several levels, e. g. very low, low, medium, high and very high. The traffic load of neighboring cells can be predicted based on the historical data from the performance management tool of the radio access network.

In Table 8 data features of load information L1, L2 and L3 are added. L1, L2, L3 are traffic loads in the cell c1, c2 and c3 respectively. Table 8 collected data with extended features of traffic load:

| | |
|---|---|
| RSRP | -94 |
| d1 | 200 |
| h1 | 10 |
| L1 | low |
| d2 | 300 |
| h2 | -30 |
| L2 | high |
| d3 | 500 |
| h3 | 100 |
| L3 | low |
| DL kbps/PRB | 1000 |
| UL kbps/PRB | 89 |

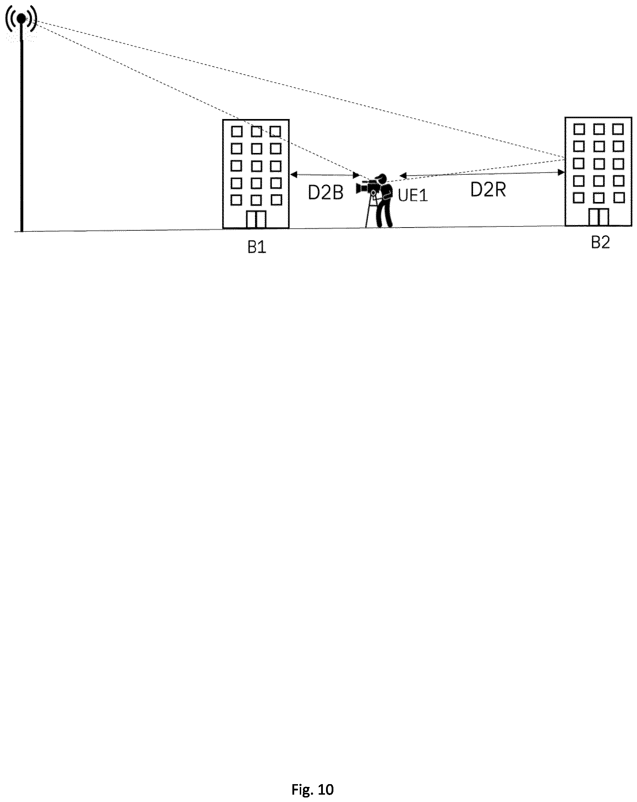

More features that may impact bps/RB of a UE can be added, for example, Frequency (F), transmission power and antenna gain of reference signal, beam type, number of beams, relative angle of a UE to cell antenna, distance to building (D2B) and distance to reflector (D2R). D2B is the distance of the UE to the closest building or object between the UE and the cell antenna and the D2R is the distance of UE to a building or an object that reflects the radio propagation as shown in Fig. 10. Fig. 10 shows a distance to building (D2B between UE1 and B1) and a distance to reflector (D2R between UE1 and B2) in an example scenario.

Table 9 and Table 10 are data features that can be used for model training, validation and evaluation for UL and DL kbps/RB prediction, respectively. For the UL kbps/RB prediction, the traffic loads L1, L2 and L3 are UL traffic loads in the cell c1, c2 and c3. For the DL bps/RB prediction, the traffic loads L1, L2 and L3 are DL traffic loads. To reduce the ML training time, value variations of data features may be reduced. In Table 5, UL kbps/RB is changed from 89 to 90. The RSRP value is changed from -94 to -95. The kbps/RB value can be categorized in 10 and 100 intervals for UL kbps/RB and DL kbps/RB, respectively. The RSRP value can be categorized in -5 interval. RSRP value variations can be further reduced by changing any RSRP value smaller than -115 to -115 and any value larger than -65 to -65. The value range of RSRP can be {-65, -70, -75, -80, -85, -90, -95, -100, -105, -110, -115}. The same approach can be applied to other data features like d1, d2, d3, h1, h2, h3, D2B and

B2R. In this example the training and prediction methods comprise categorizing one or more of the basic features and the additional features in a limited number of value categories.

**Table 9 data features for UL kbps/RB ML model training**

| | |
|---|---|
| RSRP | -95 |
| d1 | 200 |
| h1 | 10 |
| L1 | low |
| d2 | 300 |
| h2 | -30 |
| L2 | high |
| d3 | 500 |
| h3 | 100 |
| L3 | low |
| D2B | 5 |
| D2R | 15 |
| UL kbps/PRB | 90 |

**Table 10 data features for DL kbps/RB ML model training:**

| | |
|---|---|
| RSRP | -95 |
| d1 | 200 |
| h1 | 10 |
| L1 | low |
| d2 | 300 |
| h2 | -30 |
| L2 | high |
| d3 | 500 |
| h3 | 100 |
| L3 | low |
| D2B | 5 |
| D2R | 15 |
| DL kbps/PRB | 1000 |

After data with data features in Table 9 and Table 10 are prepared, standard ML algorithms like Artificial Neural Networks (ANN), Support Vector Machine (SVM) can be applied to train, validate, and evaluate the ML models for DL/UL kbps/RB prediction. The input variables are X = {RSRP, d1, h1, L1, d2, h2, L2, d3, h3, L3, D2B, D2R}. Depending on the accuracy requirements, more variables can be added, or some variables can be combined or removed. The importance of variables can be defined to differentiate the contribution of each variable to DL/UL kbps/RB prediction. For example, the variable RSRP is much more relevant than other variables.

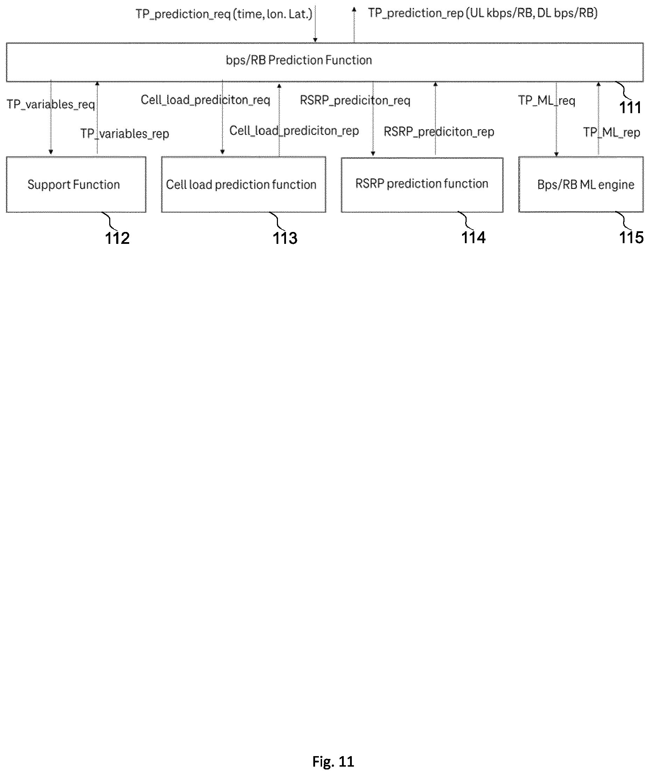

The trained model can be deployed in a bps/RB ML engine as shown in Fig. 11. Fig. 11 depicts a system implementation for prediction of a spectral efficiency in an example. Fig. 11 shows a bps/RB prediction function 111, which uses support function 112, cell load prediction function 113, RSRP prediction function 114 and bps/RB ML engine 115. To request a kbps/RB prediction for a UE, the bps/RB prediction function 111 can be invoked by an API call TP_prediction_req (time, lon., lat.) for the bps/RB prediction of the UE at the specific time and location (given by lon. and lat.). After receiving this TP_prediction_req, the bps/RB prediction function gets variables (d1, h1, d2, h2, d3, h3, D2B and D2R) and cell IDs of cell c1, c2 and c3 from the support function 112 by invoking an API call TP_variables_req (lon., lat.). The support function 112 responses with TP_variables_rep (c1, c2, c3, d1, h1, d2, h2, d3, h3, D2B and D2R).

After receiving this TP_variables_rep from the support function 112, the bps/RB prediction function 111 invokes an API call Cell_load_prediction_req (time, c1, c2, c3) to the cell load prediction function 113. The cell load prediction function 113 responses with a Cell_load_prediction_rep (UL _L1, UL_L2, UL_L3, DL_L1, DL_L2, DL_L3). At the same time, bps/RB prediction function 111 invokes an API call RSRP_prediction_req (lon., lat.) to the RSRP prediction function 114 to get the variable RSRP in line with the above description. After receiving the Cell_load_prediction_rep from the cell load prediction function 113 and the RSRP_prediciton_rep from the RSRP prediction function 114, the bps/RB prediction function 111 invokes an API call TP_ML_req (RSRP, d1, h1, UL_L1, DL_L1, d2, h2, UL_L2, DL_L2, d3, h3, UL_L3, DL_L3, D2B, D2R) to bps/RB ML engine 115. The bps/RB ML engine 115 responses with TP_ML_req (UL kbps/RB and DL kbps/RB). After receiving the TP_ML_rep from the bps/RB ML engine 115, the bps/RB prediction function 111 responds with TP_prediciton_rep (UL kbps/RB, DL kbps/RB) to the bps/RB prediction request.

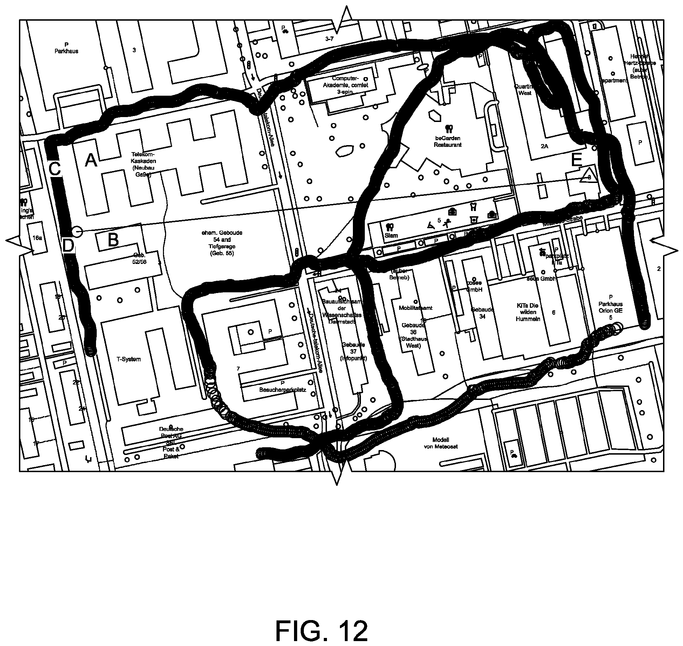

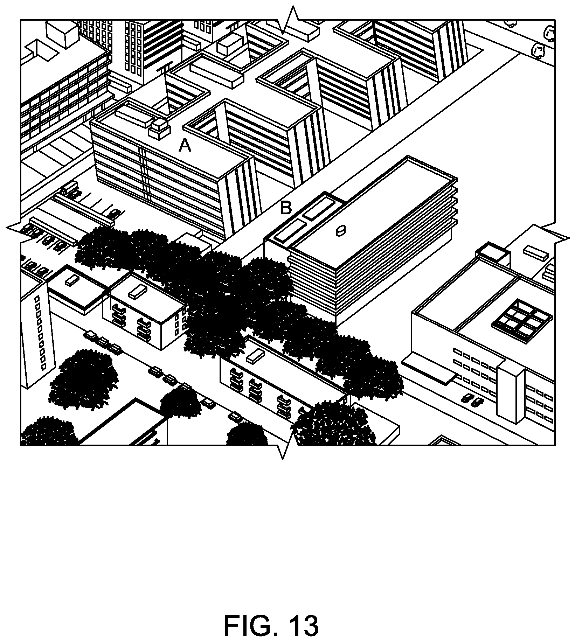

In the following some specific training data and prediction results will be presented. Fig. 12 illustrates 5G coverage plotted with measured values in an example scenario. Fig. 12 shows a 5G coverage plotted with measured values of radio reception quality. From Fig. 12 shadowing effects can be observed evoked by buildings. Location A is a building with a height of 23 meters and location B is a building with a height of 6 meters as shown in Fig. 13. Fig. 13 shows a building constellation in the example scenario of Fig. 12. In location E the 5G radio cell/base station is located. In Fig. 12 location C is behind of a high building A and location D is near to a low building B. It is obvious that the reception quality in location D is much better than that in location C.

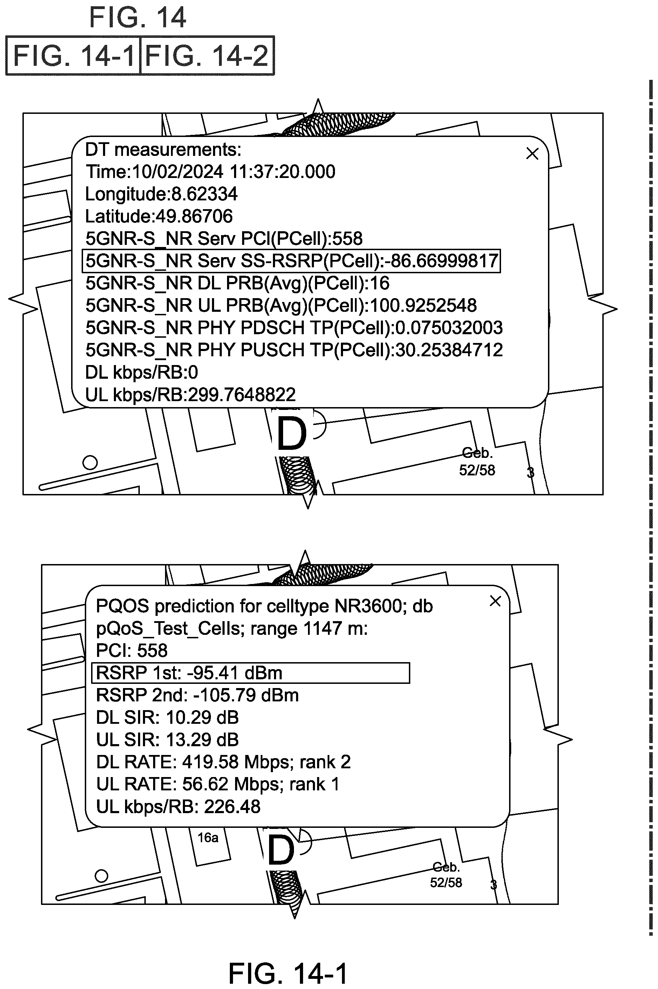

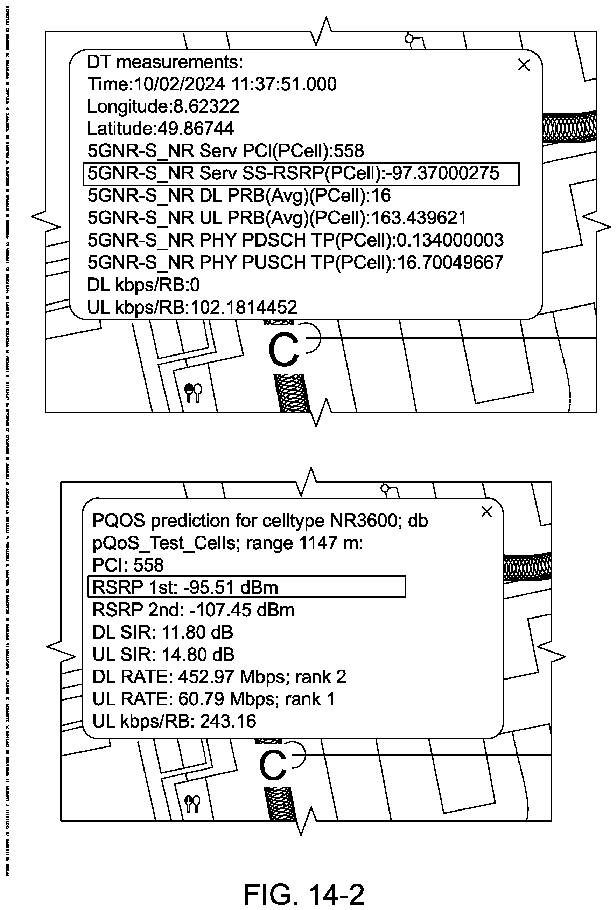

Fig. 14 depicts measured values in locations C and D at the top. Predicted RSRP in locations C and D without considering detailed radio environment, such as the height of buildings, are shown at the bottom. Fig. 14 shows at the top the measured value of RSRP highlighted in location C and location D. The measured RSRP in location C is -97dBm and in location D is -86 dBm, respectively. The reception quality in location D is much better than that in location C as expected. Fig. 14 shows at the bottom the predicted RSRP based on channel modelling that cannot take the detailed radio environment into consideration. Therefore, the predicted RSRP based on channel modeling in location C and D are very similar, say -95dBm. The good reception in location D cannot be predicted. The prediction in locations C and D without considering detailed radio environment (geometrical features), such as the height of buildings, leads to similar values.

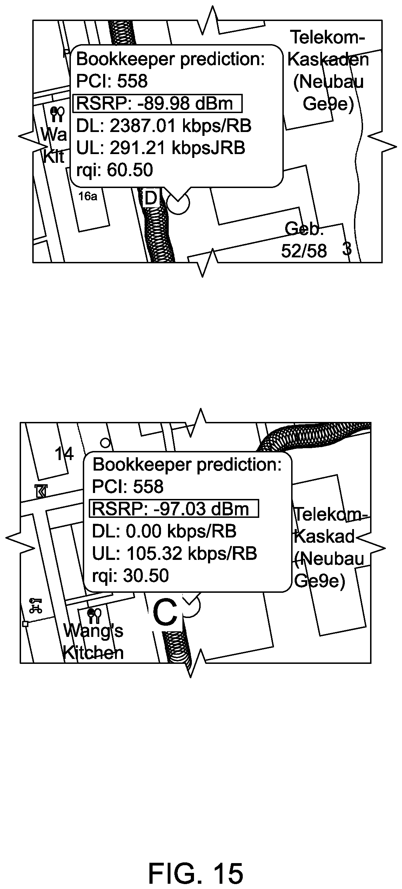

Fig. 15 illustrates predicted RSRP in locations C and D considering detailed radio environment such as the height of buildings in an example. Fig. 15 hence shows the predicted RSRP considering the detailed radio environment, so that the predicted RSRP in location D, say -89 dBm, is much better than in location C, say -97 dBm, which are much closer to realistic values. In the results of the example method, the predicted RSRP in locations C and D considers the detailed radio environment in term of the geometrical features, such as the height of buildings, and leads to better results.

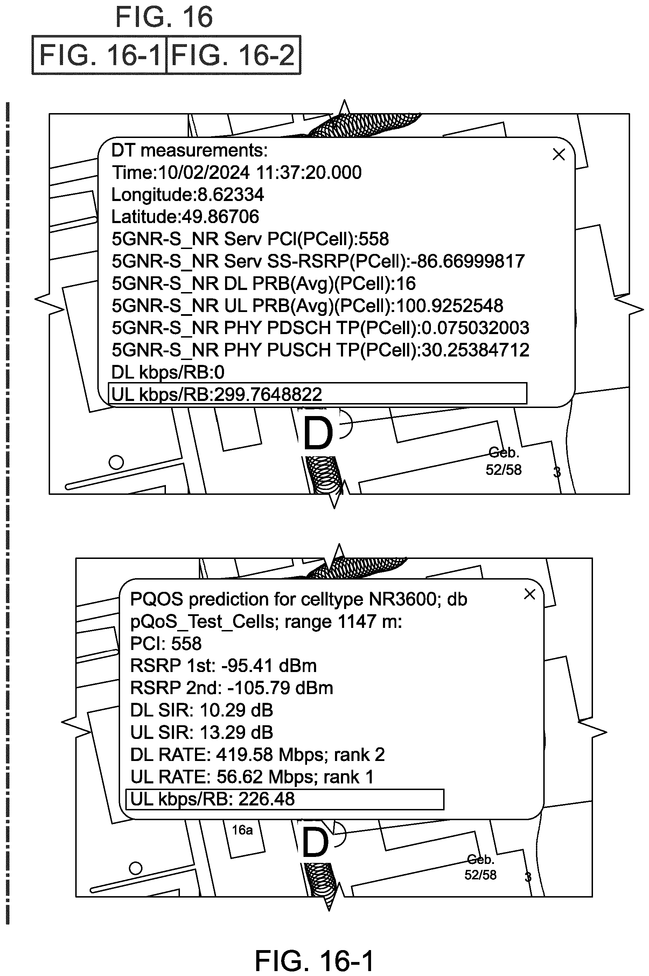

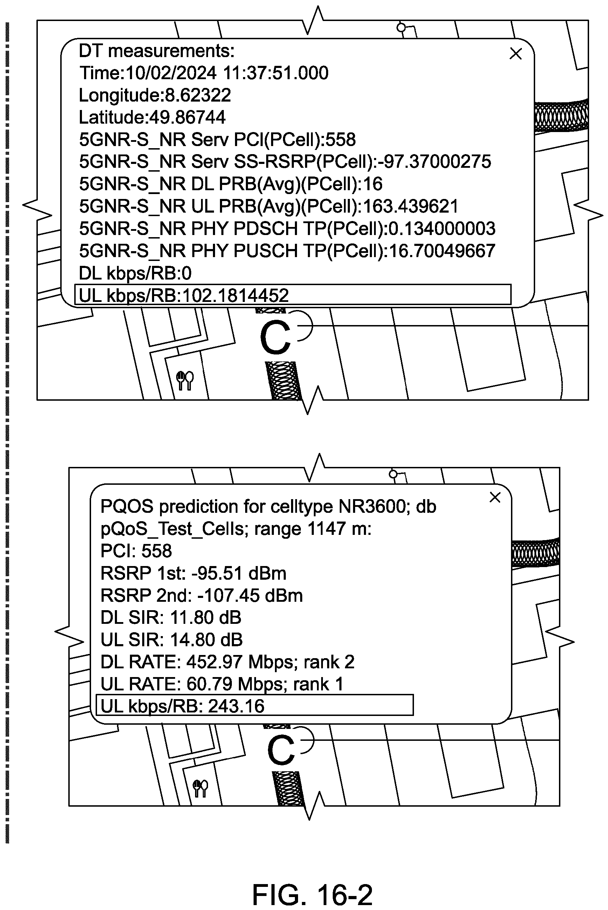

Fig. 16 shows measured values in location C and D at the top. Predicted RSRP in locations C and D without considering detailed radio environment, such as the height of buildings, are shown at the bottom. At top measured UL spectrum efficiency is highlighted in location C and location D. The measured UL kbps/RB in location C is 102 kbps/RB and in location D is 299 kbps/RB. Therefore, the UL spectrum efficiency in location D is almost 3 times of that in location C.

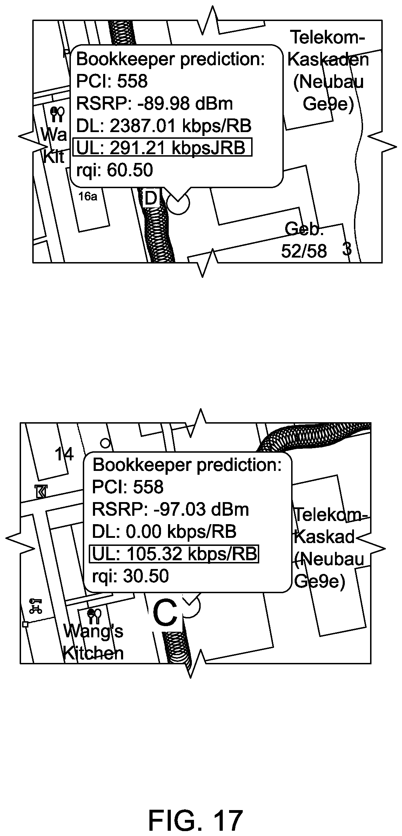

At the bottom Fig. 16 the predicted UL spectrum efficiency based on channel modelling that does not take the detailed radio environment into consideration. Therefore, the predicted UL kbps/RB based on channel modeling in location C, 243 kbps/RB, is even better that in location D, 226 kbps/RB. These predictions would result in inefficient resource usage or degrading of service quality. Fig. 17 depicts predicted UL spectrum efficiency in locations C and D considering detailed radio environment, such as the height of buildings, in an example. Fig. 17 shows the predicted spectrum efficiency considering the detailed radio environment, so that the predicted UL spectrum efficiency in location D, say 291 kbps/RB, is much better than in location C, say 105 kbps/RB, which are much closer to the realistic/measured spectrum efficiency in locations C and D.

Summarizing, examples provide a ML-based system and an algorithm for RSRP prediction using collected data from a measurement UE, with the basic data features: location, cell id and reception quality, such as RSRP. The basic data features are further extended with additional data features by determining the antenna position and parameters of the serving radio cell for the measured data entry and calculating data features, such as D, A, H, D2B, D2R, based on the geolocation of the data entry and the antenna position. The extended features may be parameters of the serving radio cell that are stored in a database (DB), e. g. Tx power (Tx), the antenna gain (G), the beam type (T), and/or the number of beams (N). Additional data or geometrical features may be further calculated by a support function, like distance from the UE to the serving cell antenna (D), and relative angle of UE to the serving cell antenna (A). The relative angle of the UE to the serving cell antenna may be categorized in degree areas, such as degree ranges of 20, 40, 60 and -20, -40 and -60. Data/geometrical features may be further added to characterize the radio environment, like line-of-sight (LOS), non-line of sight (NLOS), Distance-to-Building (D2B) and Distance-to-Reflector (D2R). The line of sight and non-line of sight are categorized by the smallest vertical distance from the connection line between the serving cell antenna and the UE to a build or object between them. The negative value of the smallest vertical distance means NLOS and positive value of the smallest vertical distance is LOS. A reflector may be determined by checking a building or an object that is behind of the UE and higher than the UE position. The value variations of data features may be reduced in intervals. For example, the RSRP value variations can be reduced to {-65, -70, -75, -80, -85, -90, -95, -100, -105, -110, -115}. All RSRP values larger than -65 is set as -65 and less than -115 set as -115. The RSPR prediction system can be implemented in an API based system with a support function that calculates the data features based on the UE position and a RSRP ML engine that provides the predicted RSRP value.

Examples may also provide a ML-based system and an algorithm that predicts spectrum efficiency of a UE, such as in terms of data rate per RB (kbps/RB) using collected data from a measurement UE, with the basic data features: time, location, cell ID, reception quality and spectrum efficiency. The basic data features are further extended with additional data features by determining the antenna position and parameters of the serving radio cell and neighboring cells for the measured data entry and calculating data/geometrical features such as d, h related to the serving and/or neighboring radio cells based on the geolocation of the data entry and the antenna positions of the serving and/or neighboring cells. The extended data features or geometrical features may be distances from UE to the serving and neighboring cells as well as the smallest vertical distances from the connection line between UE and the cell antennas to a building or an object between them. If the building or object is higher than the connection line that causes NLOS, the value of the smallest vertical distance from the connection line to a building or an object is negative. The data features may be further extended with the UL and DL traffic loads in the serving and neighboring cells. More features can be added, for example, frequency (F), transmission power and antenna gain of reference signal, beam type, number of beams, relative angle of a UE to cell antenna, distance to building (D2B) and distance to reflector (D2R). For the simplicity, some variables can be combined or removed. To reduce the ML training time, value variations of data features may be reduced by categorization of values to a certain interval. The bps/RB prediction system can be implemented in an API based system with a support function, cell load prediction function, RSRP prediction function and bps/RB ML engine.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method (10) for training a machine learning model to predict a radio quality for user equipment, UE, at a location covered by a mobile communication system, the method (10) comprising
generating (11) training data with
basic feature training sets, which are based on measurements conducted at positions in a serving radio cell,
additional feature sets comprising information about radio parameters of the serving radio cell and/or one or more neighboring radio cells,
geometrical features of measurement positions, wherein the geometrical features comprise distances being determining for a radio propagation channel between the serving radio cell and a measurement position, and
radio qualities obtained at measurement positions; and
training (12) the machine learning model with the training data.

2. The method (10) of claim 1, wherein a basic feature training set comprises one or more elements of the group of information about a time of a measurement, a position of the measurement, a cell identification of the serving radio cell measured, a reception quality, and a spectral efficiency at the measurement position.

3. The method (10) of one of the claims 1 or 2, wherein an additional feature set comprises one or more elements of the group of information about an antenna position and direction of the serving radio cell and/or the neighboring radio cells, a beam type of the serving radio cell and/or the neighboring radio cells, a number of beams of the serving radio cell and/or the neighboring radio cells, load parameters of the serving radio cell and/or the one or more neighboring radio cells, and a transmission power and antenna gain of a reference signal of the serving radio cell and/or the neighboring radio cells.

4. The method (10) of one of the claims 1 to 3, wherein the geometrical features comprise one or more elements of the group of information about a distance between a measurement position and the antenna of the serving radio cell and/or the one or more neighboring radio cells, a smallest vertical distance from a connection line between a measurement position and a radio cell antenna to a building or an object between a measurement position and the radio cell antenna of the serving radio cell and/or the one or more neighboring radio cells, a distance between a measurement position and a building, a distance between a measurement position and a reflector, a relative angle between a measurement position and an antenna of the serving radio cell and/or of the one or more neighboring radio cells.

5. The method (10) of one of the claims 1 to 4, further comprising generating training data for different frequency bands.

6. A method (20) for predicting a radio quality for user equipment, UE, at a location covered by a mobile communication system, the method (20) comprising
obtaining (21) a basic feature prediction set based on the location of the UE;
obtaining (22) an additional feature set comprising information about radio parameters of a serving radio cell and/or of one or more neighboring radio cells;
determining (23) geometrical features based on the location and the additional feature set, wherein the geometrical features comprise distances being determining for a radio propagation channel between the serving radio cell and the UE; and
using (24) machine learning model being trained according to one of the claims 1 to 5 to obtain a predicted radio quality of the UE at the location based on the basic feature prediction set, the additional feature set and the geometrical features.

7. The method (20) of claim 6, wherein the basic feature prediction set comprises one or more elements of the group of information about a time for the prediction, the location of the UE, and/or a cell identification of a serving radio cell at the location of the UE.

8. The method (20) of one of the claims 6 or 7, wherein the additional feature set comprises one or more elements of the group of information about an antenna position and direction of the serving radio cell and/or the one or more neighboring radio cells, a beam type of the serving radio cell and/or the one or more neighboring radio cells, a number of beams of the serving radio cell and/or the one or more neighboring radio cells, load parameters of the serving radio cell and/or the one or more neighboring radio cells, and a transmission power and antenna gain of a reference signal of the serving radio cell and/or the one or more neighboring radio cells.

9. The method (20) of one of the claims 6 to 8, wherein the geometrical features comprise one or more elements of the group of information about a distance between the UE and the antenna of the serving radio cell and/or the one or more neighboring radio cells, a smallest vertical distance from a connection line between the UE and a radio cell antenna to a building or an object between the UE and the radio cell antenna of the serving radio cell and/or the one or more neighboring radio cells, a distance between the UE and a building, a distance between the UE and a reflector, a relative angle between the UE and an antenna of the serving radio cell and/or of the one or more neighboring radio cells.

10. The method (20) of one of the claims 6 to 9, wherein the radio quality is obtained as spectral efficiency in terms of a data rate per radio resource block scheduled by the serving radio cell, and/or wherein the radio quality is obtained as reference signal receive power of a reference signal transmitted by the serving radio cell.

11. The method (20) of one of the claims 6 to 10, wherein the basic feature set and the additional feature set are further based on a transmission frequency of the serving radio cell and/or the one or more neighboring radio cells, and/or further comprising categorizing one or more of the basic features and the additional features in a limited number of value categories.

12. The method (20) of one of the claims 6 to 11, using an application programming interface, API, based system comprising one or more functions configured to obtain the basic feature set and the additional feature set.

13. The method (20) of claim 12, further comprising a prediction engine using a machine learning model configured to communicate with the one or more functions, wherein the one or more functions comprise one or more elements of the group of a support function configured to determine the geometrical features, a cell load prediction function, and a reference signal reception power prediction function.

14. A computer program having a program code for performing one of the methods of one of the claims 1 to 13, when the computer program is executed on a computer, a processor, or a programmable hardware component.

15. An apparatus (30) for a mobile communication system, comprising
one or more interfaces (32) configured to communicate in the mobile communication system; and
one or more processing devices (34) configured to perform one of the methods of one of the claims 1 to 13.

## Amended claims

### Amended claims in accordance with Rule 137(2) EPC.

1. A method (10) for training a machine learning model to predict a radio quality for user equipment, UE, at a location covered by a mobile communication system, the method (10) comprising
generating (11) training data with
basic feature training sets, which are based on measurements conducted at positions in a serving radio cell,
additional feature sets comprising information about radio parameters of the serving radio cell and/or one or more neighboring radio cells,
geometrical features of measurement positions, wherein the geometrical features comprise distances being determining for a radio propagation channel between the serving radio cell and a measurement position, and
radio qualities obtained at measurement positions; and
training (12) the machine learning model with the training data,
wherein the geometrical features comprise one or more elements of the group of information about a smallest vertical distance from a connection line between a measurement position and a radio cell antenna to a building or an object between a measurement position and the radio cell antenna of the serving radio cell and/or the one or more neighboring radio cells, a distance between a measurement position and a building, a distance between a measurement position and a reflector.

2. The method (10) of claim 1, wherein a basic feature training set comprises one or more elements of the group of information about a time of a measurement, a position of the measurement, a cell identification of the serving radio cell measured, a reception quality, and a spectral efficiency at the measurement position.

3. The method (10) of one of the claims 1 or 2, wherein an additional feature set comprises one or more elements of the group of information about an antenna position and direction of the serving radio cell and/or the neighboring radio cells, a beam type of the serving radio cell and/or the neighboring radio cells, a number of beams of the serving radio cell and/or the neighboring radio cells, load parameters of the serving radio cell and/or the one or more neighboring radio cells, and a transmission power and antenna gain of a reference signal of the serving radio cell and/or the neighboring radio cells.

4. The method (10) of one of the claims 1 to 3, wherein the geometrical features further comprise one or more elements of the group of information about a distance between a measurement position and the antenna of the serving radio cell and/or the one or more neighboring radio cells, a relative angle between a measurement position and an antenna of the serving radio cell and/or of the one or more neighboring radio cells.

5. The method (10) of one of the claims 1 to 4, further comprising generating training data for different frequency bands.

6. A method (20) for predicting a radio quality for user equipment, UE, at a location covered by a mobile communication system, the method (20) comprising obtaining (21) a basic feature prediction set based on the location of the UE; obtaining (22) an additional feature set comprising information about radio parameters of a serving radio cell and/or of one or more neighboring radio cells;
determining (23) geometrical features based on the location and the additional feature set, wherein the geometrical features comprise distances being determining for a radio propagation channel between the serving radio cell and the UE,
wherein the geometrical features comprise one or more elements of the group of information about a smallest vertical distance from a connection line between a measurement position and a radio cell antenna to a building or an object between a measurement position and the radio cell antenna of the serving radio cell and/or the one or more neighboring radio cells, a distance between a measurement position and a building, and a distance between a measurement position and a reflector; and
using (24) machine learning model being trained according to one of the claims 1 to 5 to obtain a predicted radio quality of the UE at the location based on the basic feature prediction set, the additional feature set and the geometrical features.

7. The method (20) of claim 6, wherein the basic feature prediction set comprises one or more elements of the group of information about a time for the prediction, the location of the UE, and/or a cell identification of a serving radio cell at the location of the UE.

8. The method (20) of one of the claims 6 or 7, wherein the additional feature set comprises one or more elements of the group of information about an antenna position and direction of the serving radio cell and/or the one or more neighboring radio cells, a beam type of the serving radio cell and/or the one or more neighboring radio cells, a number of beams of the serving radio cell and/or the one or more neighboring radio cells, load parameters of the serving radio cell and/or the one or more neighboring radio cells, and a transmission power and antenna gain of a reference signal of the serving radio cell and/or the one or more neighboring radio cells.

9. The method (20) of one of the claims 6 to 8, wherein the geometrical features comprise one or more elements of the group of information about a distance between the UE and the antenna of the serving radio cell and/or the one or more neighboring radio cells, a smallest vertical distance from a connection line between the UE and a radio cell antenna to a building or an object between the UE and the radio cell antenna of the serving radio cell and/or the one or more neighboring radio cells, a distance between the UE and a building, a distance between the UE and a reflector, a relative angle between the UE and an antenna of the serving radio cell and/or of the one or more neighboring radio cells.

10. The method (20) of one of the claims 6 to 9, wherein the radio quality is obtained as spectral efficiency in terms of a data rate per radio resource block scheduled by the serving radio cell, and/or wherein the radio quality is obtained as reference signal receive power of a reference signal transmitted by the serving radio cell.

11. The method (20) of one of the claims 6 to 10, wherein the basic feature set and the additional feature set are further based on a transmission frequency of the serving radio cell and/or the one or more neighboring radio cells, and/or further comprising categorizing one or more of the basic features and the additional features in a limited number of value categories.

12. The method (20) of one of the claims 6 to 11, using an application programming interface, API, based system comprising one or more functions configured to obtain the basic feature set and the additional feature set.

13. The method (20) of claim 12, further comprising a prediction engine using a machine learning model configured to communicate with the one or more functions, wherein the one or more functions comprise one or more elements of the group of a support function configured to determine the geometrical features, a cell load prediction function, and a reference signal reception power prediction function.

14. A computer program having a program code for performing one of the methods of one of the claims 1 to 13, when the computer program is executed on a computer, a processor, or a programmable hardware component.

15. An apparatus (30) for a mobile communication system, comprising
one or more interfaces (32) configured to communicate in the mobile communication system; and
one or more processing devices (34) configured to perform one of the methods of one of the claims 1 to 13.
